## Europäisches Patentamt

(19) **European Patent Office**

**Office européen des brevets**

(11) Publication number : **0 252 547 B1**

(12) **EUROPEAN PATENT SPECIFICATION**

(45) Date of publication of patent specification :
10.04.91 Bulletin 91/15

(51) Int. Cl.⁵ : **D03J 1/00, D03J 1/20**

(21) Application number : **87201161.4**

(22) Date of filing : **17.06.87**

(54) **Method for controlling the location of the weft threads in a fabric.**

(30) Priority : **11.07.86 NL 8601818**

(43) Date of publication of application :
**13.01.88 Bulletin 88/02**

(45) Publication of the grant of the patent :
**10.04.91 Bulletin 91/15**

(84) Designated Contracting States :
**BE CH DE ES FR GB IT LI LU**

(56) References cited :
BE-A- 859 668
DE-A- 3 435 391
GB-A- 2 041 693
"La Grande Encyclopedie", Larousse, 1975,
vol. 15, pages 9408-9410

(73) Proprietor : **Picanol N.V.**
**Polenlaan 3-7**
**B-8900 Ieper (BE)**

(72) Inventor : **Vandeweghe, Michel**
**Kemmelstraat 88**
**B-8940 Wijtschate-Heuvelland (BE)**
Inventor : **Verdiere, Piet**
**Broelkaai 1G**
**B-8500 Kortrijk (BE)**

(74) Representative : **Donné, Eddy**
**M.F.J.Bockstael Arenbergstraat 13**
**B-2000 Anvers (BE)**

## Description

The present invention concerns a method for controlling the location of the weft threads in a fabric. This method can be put into practice in a weaving loom immediately after the manufacture of the fabric or on a special check point independently from the weaving loom.

More particularly, the invention concerns a method designed to indicate a numeric value corresponding to the fabric quality and more specially concerning the position of the weft threads.

It is already known that a lot of defects can occur in the fabrics as a consequence of a wrong position of the weft threads. Generally speaking, these defects are related to the starting strips which are formed because the fabric is more open or tight at several locations that it should be normally be the case. Further on relaxation and reflection starting strips can also occur if one or several weft threads are located on a too deep position or respectively if one weft thread is inserted into the fabric with an excessive tension.

It is already known that, in order to track down such defects on the weaving loom and more specially the modifications of the fabric density resulting from such defects, methods can be used that permit to adjust the weaving process. According to the German Patent Application Nr. 3.435.391 this check is carried out on the weaving loom by using a macro lens and a video camera to generate an image of the fabric, whereby this image is digitalized by the use of a matrix and the distances between the weft threads are calculated afterwards.

This known method has, however, the disadvantage that the fabrics without contrasting aspect cannot be checked by simply using this technique. Indeed, in the case of fabrics with a large fabric density and also in the case of fibrous fabrics, the edges of the weft threads are difficult to distinguish and it is consequently quite impossible to carry out an automatic check in a relatively simple way.

In order to find a solution to this disadvantage the present invention foresees a method for checking the position of the weft threads of a fabric, whereby the aforesaid disadvantage is systematically avoided.

To this end the invention relates to a method for controlling the location of the weft threads in a fabric, more specifically for determining the quality of the fabric, comprising the steps of generating an image of the fabric by means of a video camera whereby the image quality is improved by means of a contrast improving illumination ; automatically treating the image of the video camera by means of a matrix system, whereby the matrix of the system is located in such a way that the columns are corresponding with the directions of the weft threads, whereby the light intensity of all points is counted afterwards, column after column and whereby the distances between the columns showing the successive maximum slopes of the light intensity curves are used as a measure for the check ; and determining out of said treatment a quantitative evaluation of the fabric quality in relation with the position of the weft threads.

The invention also relates to a method for controlling the location of the weft threads in a fabric, more specifically for determining the quality of the fabric, comprising the steps of generating an image by means of a video camera, whereby the image quality is improved by means of a contrast improving illumination ; treating the image by means of scaler to carry out a check on the deviations ; and determining out of said treatment a quantitative evaluation of the fabric quality in relation with the position of the weft threads.

According to a first embodiment, the contrast improving illumination mainly comprises the illumination of the fabric in angular position along the side where the video camera is mounted. According to an alternative solution, the contrast improving illumination is mainly achieved by illumination through the fabric.

According to a special embodiment, the present invention also foresees a depth measurement, whereby the deviation of the position of the weft threads can be measured and calculated from the relaxation defects.

In order that the characteristics of the invention are better understood, a few preferred layouts will be described hereafter by way of example without any limitative character, whereby use is made of the method of the present invention and with reference to the figures in appendix that represent respectively :

figure 1 the contrast improving illumination by means of illumination through the fabric, schematically illustrated ;

figure 2 the contrast improving illumination by means of a shew illumination, as schematically illustrated ;

figure 3 the image of the fabric that is seen by the video camera in the case of a shew illumination ;

figure 4 a schematic illustration of the method for checking a complete fabric ;

figure 5 an illustration of the measurement results with use of a metric system ;

figures 6 and 7 illustrations of the method for depth measurements.

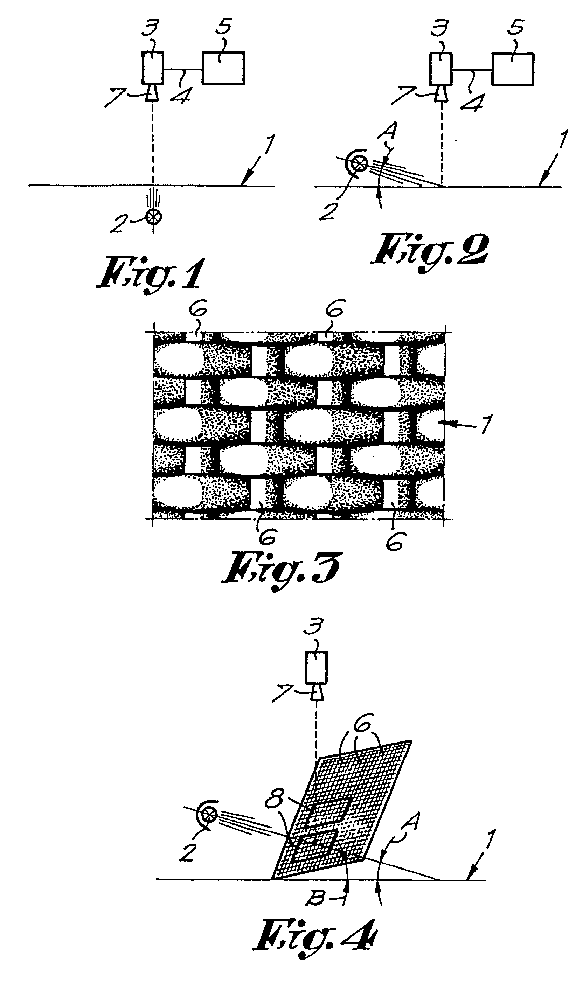

As illustrated on figure 1, the method in accordance with the invention is carried out by illuminating through the fabric 1 to be evaluted, for instance by placing a light source 2 under this fabric, while a video camera 3 is directed to the top side of the fabric 1. The signals 4 from the video camera 3 are treated by a manual or automatic treatment unit 5.

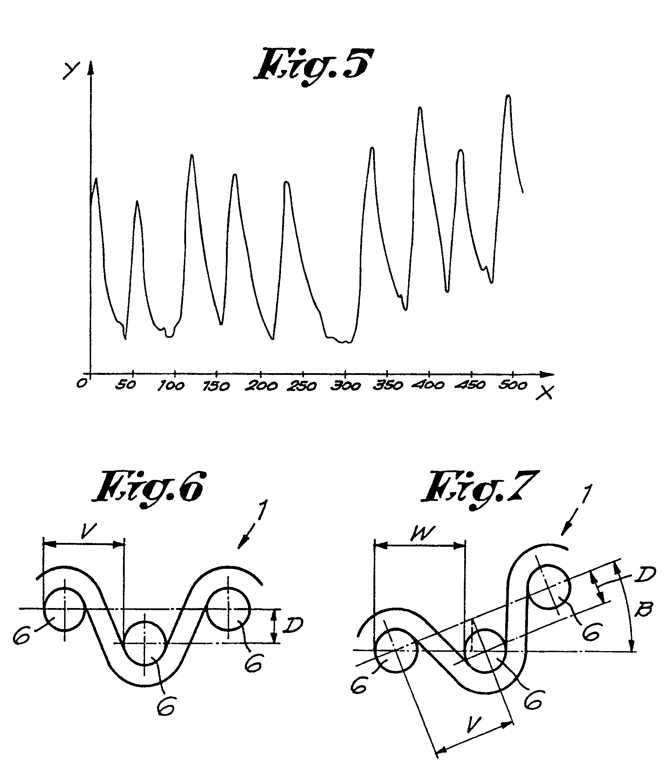

In the case that the fabric is very tight, preference will be given to the embodiment illustrated on figure 2. In this case, the light source 2 is located above the fabric 1 in such a way that it is illuminated following a well determined angle A. This way, the advantage is obtained that the weft threads 6 are more strongly illuminated along one side, while on the other side a shadow effect is achieved. Quite obviously, this method results into a sharp and very contrasting image as illustrated on figure 3.

In the case of manual treatment of the image, the treatment unit 5 will be mainly composed of a scaler. This is a device superimposing two vertical lines and one horizontal reference line onto the image, whereby these three lines can be displaced manually over the image by rotating potentiometers. The method used in this way implies that the two vertical lines are put on two sucessive bright-dark contrast transitions and that the distance between the two vertical lines is recorded. This distance can then be recorded on several locations of the fabric in order to determine the average of the deviations of the weft thread positions. In the case of unlinear contrast transitions, the lines of the scalers are usually shifted on the transition average.

In the case of automatic checking of the location of the weft threads 6, choice will be preferably made of a treatment unit 5 that is equipped of a metric system. By means of these metric systems the light and dark points of the image of the fabric 1 that has been recorded by means of a macro lens 7 can be digitalized and afterwards read and interpreted according to the desired result. The fabric 1 is preferably evaluated in a systematic way. As illustrated on figure 4, several images can be taken and treated on points located near each other. This way, it is possible to compare these images with measurements from a perfect fabric. As a result of the measurements carried out on 8 different locations near each other that are all concerning the same weft threads 6, it is possible to calculate an average from these results in order to get a quantitative evaluation of the fabric quality in relationship with the position of the weft threads.

The aforesaid matrix system can be for instance a matrix of 512 × 512 points, corresponding for about 5 weft threads per image, corresponding to a resolution of about 1% for each weft thread. In order to obtain very quickly reliable results use shall be made of the following algorithm in accordance with the invention. The matrix system is first of all located in such a way that the matrix columns are parallel to the direction of the weft threads. Afterwards, the 512 values are counted, column after column. This way we get a series of 512 values indicating the total light intensity on each vertical line. These values have a typical pattern illustrated on figure 5, whereby the distance between the successive maximum slopes are corresponding to the distance between the shots. The distances between the shots can be automatically determined from the aforesaid values by using a micro-processor. This micro-processor can also attach a numeric value to the checked fabric from the evaluation of these values by using an equation with previously set values.

In the case of noise rich images, for instance when the assembly is strongly intricated, the determination of the aforesaid maximum slopes may be somewhat difficult because the maxima of the curves are not clearly determined. This trouble can be avoided by replacing each value on each point of the matrix by the average of the value itself and of the value of the adjacent points, whereby, according to the present invention, only the adjacent points located on the same vertical line are preferably taken into account. This counting following vertical lines followed by the determination of the average has an advantage by comparison with the usual points suppressing filter, whereby each point is replaced by the average of its 8 adjacent points because it runs 10 times faster.

In the case of a fabric with glittering warp threads the fabric is subdivided in stripes having the thickness of one warp thread. If the method is applied for evaluating the fabric, the odd stripes are for instance treated first and afterwards the even stripes separately.

According to a special aspect of the invention, a depth measurement is also foreseen. The tern "depth measurement" means that the distance where a weft thread 6 is located on a deeper position has a consequence of a relaxation defect by comparison with the normal position of the other weft threads 6. The method to be applied is mainly illustrated on figures 6 and 7. In this case, the depth D is determined by several successive distance measurements. First of all, as illustrated on figure 6, the horizontal distance V is determined. Afterwards the fabric 1 is rotated on an angle B in relationship with the observation direction of the video camera 3. The distance in the present case W is determined again between two successive weft threads 6. The value of D can be calculated from the mathematical equation :

$$W = V \cdot \cos B + D \sin B$$

An angle comprised between 30 and 50 degrees is preferably chosen for B because this value of B generally gives a very contrasting image. The depth D will be preferably calculated by taking the average of the results of several measurements which have been carried out with different angles.

The present invention is by no means limited to the layouts described by way of examples and illustrated in the figures in appendix but this method for checking the position of the weft thread of a fabric can be put into practice according to different alternative solutions without departing from the scope of the present invention.

## Claims

1. Method for controlling the location of the weft threads in a fabric, more specifically for determining the quality of the fabric, comprising the steps of generating an image of the fabric by means of a video camera (3) whereby the image quality is improved by means of a contrast improving illumination ; automatically treating the image of the video camera (3) by means of a matrix system, whereby the matrix of the system is located in such a way that the columns are corresponding with the directions of the weft threads (6), whereby the light intensity of all points is counted afterwards, column after column and whereby the distances between the columns showing the successive maximum slopes of the light intensity curves are used as a measure for the check ; and determining out of said treatment a quantitative evaluation of the fabric quality in relation with the position of the weft threads.

2. Method according to claim 1, whereby a depth measurement of the weft threads (6) showing relaxation defects is carried out, characterised by the fact that the distance (V) between successive weft threads (6) is first determined from the distances between the contrast transitions; whereby the location of the plane where the fabric (1) is situated is modified in relationship with the detecting direction of the video camera (3) ; that a new distance measurement (W) is carried out following the observation direction obtained this way ; and that finally the results (V, W) of the two measurements and the angular rotation (D) of the fabric in relationship with the video camera (3) are used for determining the depth (D) of the weft thread (6) involved in relationship with the normal plane of the fabric and checked this way.

3. Method according to one of the previous claims, characterised by the fact that the fabrics with glittering warp threads are submitted to a measurement in two stages.

4. Method for controlling the location of the weft threads in a fabric, more specifically for determining the quality of the fabric, comprising the steps of generating an image by means of a video camera (3), whereby the image quality is improved by means of a contrast improving illumination ; treating the image by means of a scaler to carry out a check on the deviations ; and determining out of said treatment a quantitative evaluation of the fabric quality in relation with the position of the weft threads.

5. Method according to claim 4, whereby a depth measurement of the weft threads (6) showing relaxation defects is carried out, characterised by the fact that the distance V between successive weft threads (6) is first determined from the distance between the contrast transitions, whereby the location of the plane where the fabric (1) is situated is modified in relationship with the detecting direction of the video camera (3) ; that a new distance measurement (W) is carried out following the observation direction obtained this way ; and that finally the results (V, W) of the two distance measurements and the angular rotation (D) of the fabric in relationship with the video camera (3) are used for determining the depth (D) of the weft thread (6) involved in relationship with the normal plane of the fabric and checked this way.

6. Method according to claim 4 our 5, characterised by the fact that the fabrics with glittering warp threads are submitted to a measurement in two stages.

## Ansprüche

1. Ein Verfahren zum Kontrollieren der Position von Schußfäden in einem Gewebe, genauer gesagt zum Bestimmen der Gewebequalität, bestehend aus den Arbeitsschritten der Erzeugung eines Bildes vom Gewebe mit Hilfe einer Videokamera (3), wobei die Bildqualität mittels einer Kontrastverbesserungsbeleuchtung verbessert wird ; der automatischen Bearbeitung des Bildes der Videokamera (3) mit Hilfe eines Matrix-Systems, wobei die Matrix des Systems so angeordnet ist, daß die Spalten mit den Richtungen der Schußfäden (6) übereinstimmen, wobei die Lichtintensität aller Punkte anschließend Spalte für Spalte gezählt wird und wobei die Abstände zwischen den Spalten, die die aufeinanderfolgenden Maximums der Lichtintensitätskurven zeigen, als Maßstab für die Kontrolle verwendet werden ; und der Festlegung aus der erwähnten Bearbeitung einer quantitiven Beurteilung der Gewebequalität in bezug auf die Position der Schußfäden

2. Das Verfahren gemäß Anspruch 1, wobei eine Tiefenmessung der Schußfäden (6) zum Aufzeigen von Spannungsnachlaßfehlern ausgefürt wird, gekennzeichnet dadurch, daß der Abstand (V) zwischen aufeinanderfolgenden Schußfäden (6) zuerst anhand der Abstände zwischen den Kontrastübergängen ermittelt wird, wobei die Position der Ebene, in der sich das Gewebe (1) befindet, in bezug auf die Erfassungsrichtung der Videokamera (3) verändert wird ; daß eine neue Abstandsmessung (W) nach der so erhaltenen Beobachtungsrichtung ausgeführt wird ; und daß schließlich die Resultate (V, W) der beiden Messungen sowie die Winkeldrehung (D) des Gewebes in bezug auf die Videokamera (3) dazu verwendet werden, die Tiefe (D) der betroffenen Schußfäden (6) in bezug auf die normale Ebene des Gewebes zu bestimmen und dadurch zu kontrollieren.

3. Das Verfahren gemäß einem der vorgenannten Ansprüche, gekennzeichnet dadurch, daß Gewebe mit glänzenden Kettfäden einer Messung in zwei Phasen unterzogen werden.

4. Ein Verfahren zum Kontrollieren der Position von Schußfäden in einem Gewebe, genauer gesagt zum Bestimmen der Gewebequalität, bestehend aus den Arbeitsschritten der Erzeugung eines Bildes mit Hilfe einer Videokamera (3), wobei die Bildqualität mittels einer Kontrastverbesserungsbeleuchtung verbessert wird ; der Bearbeitung des Bildes mit Hilfe eines Skalierers zum Kontrollieren der Abweichungen ; und der Festlegung aus der erwähnten Bearbeitung einer quantitativen Beurteilung der Gewebequalität in bezug auf die Position der Schußfäden.

5. Das Verfahren gemäß Anspruch 4, wobei eine Tiefenmessung der Schußfäden (6) zum Aufzeigen von Spannungsnachlaßfehlern ausgeführt wird, gekennzeichnet dadurch, daß der Abstand V zwischen aufeinanderfolgenden Schußfäden (6) zuerst anhand des Abstands zwischen den Kontrastübergängen bestimmt wird, wobei die Position der Ebene, in der sich das Gewebe (1) befindet, in bezug auf die Erfassungsrichtung der Videokamera (3) verändert wird ; daß eine neue Abstandsmessung (W) nach der so erhaltenen Beobachtungsrichtung ausgefürt wird ; und daß schließlich die Resultate (V, W) der beiden Abstandsmessungen und die Winkeldrehung (D) des Gewebes in bezug auf die Videokamera (3) dazu verwendet werden, die Tiefe der betroffenen Schußfäden (6) in bezug auf die normale Ebene des Gewebes zu bestimmen und dadurch zu kontrollieren.

6. Das Verfahren gemäß Anspruch 4 oder 5, gekennzeichnet dadurch, daß Gewebe mit glänzenden Kettfäden einer Messung in zwei Phasen unterzogen werden.

## Revendications

1. Méthode destinée à contrôler la position des fils de trame dans un article tissé et, plus précisément, à déterminer le niveau de qualité d'un article tissé, comprenant des étapes de : génération d'une image du tissu au moyen d'une caméra vidéo (3) dont la qualité de l'image est améliorée au moyen d'un éclairage à effet d'amélioration de contraste ; traitement automatique de l'image enregistrée par la caméra vidéo (3) au moyen d'un système matriciel, la matrice du système étant placée de manière à ce que les colonnes correspondent aux directions des fils de trame (6), permettant ensuite le comptage de l'intensité lumineuse de tous les points, colonne par colonne, et dans lequel les distances entre colonnes représentant les maxima successifs des courbes d'intensité lumineuse servent de mesure de contrôle ; et détermination d'une évaluation quantitative, sur la base des données traitées, de la qualité du tissu en relation avec la position des fils de trame.

2. Méthode selon la revendication 1, mettant en oeuvre une mesure de profondeur des fils de trame (6) présentant des défauts dus à une tension insuffisante, caractérisée par le fait que la distance (V) entre fils de trame (6) successifs est d'abord déduite des distances entre transitions de contraste, la position du plan dans lequel se situe l'article (1) étant modifiée par rapport à la direction de détection de la caméra vidéo (3) ; qu'une nouvelle mesure de distance (W) est effectuée selon la direction d'observation ainsi obtenu ; et enfin, que les résultats (V, W) des deux mesures et l'angle de la rotation (B) de l'article par rapport à la caméra vidéo (3), servent à calculer la profondeur (D) du fil de trame (6) concerné par rapport au plan normal de l'article, et à contrôler cette profondeur de cette manière.

3. Méthode selon l'une des revendications précédentes, caractérisée par le fait que les articles à fils de chaîne brillants sont mesurés en deux étapes.

4. Méthode destinée à contrôler la position des fils de trame dans un article tissé et, plus précisément, à déterminer le niveau de qualité d'un article tissé, comprenant des étapes de : génération d'une image au moyen d'une caméra vidéo (3) dont la qualité de l'image est améliorée au moyen d'un éclairage à effet d'amélioration de contraste ; traitement de l'image au moyen d'une grille de référence pour contrôler la présence éventuelle d'irrégularités ; et détermination d'une évaluation quantitative, sur la base des données traitées, de la qualité du tissu en relation avec la position des fils de trame.

5. Méthode selon la revendication 4, mettant en oeuvre une mesure de profondeur des fils de trame (6) présentant des défauts dus à une tension insuffisante, caractérisée par le fait que la distance (V) entre fils de trame (6) successifs est d'abord déduite des distances entre transitions de contraste, la position du plan dans lequel se situe l'article (1) étant modifiée par rapport à la direction de détection de la caméra vidéo (3) ; qu'une nouvelle mesure de distance (W) est effectuée selon la direction d'observation ainsi obtenu ; et enfin, que les résultats (V, W) des deux mesures de distance et l'angle de la rotation (B) de l'article par rapport à la caméra vidéo (3) ; servent à calculer la profondeur (D) du fil de trame (6) concerné par rapport au plan normal de l'article, et à contrôler cette profondeur de cette manière,

6. Méthode selon les revendications 4 ou 5, caractérisée par le fait que les articles à fils, de chaîne brillants sont mesurés en deux étapes.

*Fig.1*

*Fig.2*

*Fig.3*

*Fig.4*

# Fig.5

# Fig.6

# Fig.7